# EUROPÄISCHE PATENTSCHRIFT

(11) **EP 4 068 955 B1**
(45) Veröffentlichungstag und Bekanntmachung des Hinweises auf die Patenterteilung: **31.01.2024**
(21) Anmeldenummer: 20821167.2
(22) Anmeldetag: 07.12.2020
(51) Int. Cl.: A01K 63/04, A01K 63/00, F17C 1/00

(54) **CO2-GASZUFUHR MITTELS EINES AQUARIENDRUCKGASBEHÄLTERS MIT EINEM NÄHRSUBSTRAT**
CO2 GAS SUPPLY BY MEANS OF AN AQUARIUM PRESSURIZED GAS VESSEL WITH A NUTRIENT SUBSTRATE
ALIMENTATION EN GAZ CO2 AU MOYEN D'UN RÉCIPIENT DE GAZ SOUS PRESSION D'AQUARIUM AVEC UN SUBSTRAT NUTRITIF

(30) Priorität: 07.12.2019 DE 202019004999 U
(43) Veröffentlichungstag der Anmeldung: 12.10.2022
(73) Patentinhaber: Sunbau GmbH, 40699 Erkrath (DE)
(72) Erfinder: KSIENZYK, Horst, 42719 Solingen (DE)
(74) Vertreter: Michalski Hüttermann & Partner Patentanwälte mbB
(86) Internationale Anmeldenummer: PCT/EP2020/084941
(87) Internationale Veröffentlichungsnummer: WO 2021/111009

(56) Entgegenhaltungen:
- DE-U1- 20 117 708
- DE-U1- 29 902 414
- JP-A- H07 203 805

## Beschreibung

### Technisches Gebiet

Die vorliegende Erfindung betrifft einen Aquariendruckgasbehälter zur Versorgung eines Aquariums mit im Aquariendruckgasbehälter erzeugtem CO2-Gas.

Des Weiteren betrifft die vorliegende Erfindung ein CO2-Begasungssystem mit dem vorgenannten Aquariendruckgasbehälter.

### Hintergrund der Erfindung

Für die Sauerstoffversorgung von Fischen ist eine hinreichende Bepflanzung des Aquariums von hoher Bedeutung. Die Pflanzen benötigen hierzu Kohlenstoffdioxid, CO2, welches die Grundlage für den Sauerstoff bildet. Üblicherweise wird CO2-Gas in der Aquaristik zur Pflanzenversorgung und zur pH-Wert-Regulierung eingesetzt. Hierbei wird gasförmiges CO2 im Aquarienwasser gelöst und steht den Pflanzen für die Photosynthese beziehungsweise zum Zellaufbau zur Verfügung. Zur pH-Wert-Regulierung wird das gasförmige CO2 ebenfalls im Wasser gelöst, sodass dessen pH-Wert sinkt.

Grundsätzlich kann gasförmiges CO2 dem Wasser über eine Mess- und Regelungselektronik zudosiert werden. Hierzu werden in der Aquaristik seit Jahrzehnten folgende zwei unterschiedliche Verfahren zur Bereitstellung von CO2-Gas angewandt.

Einerseits wird CO2-Gas mittels CO2-Druckkartuschen bereitgestellt, bei welchen der Kartuschendruck durch einen Druckminderer soweit reduziert wird, dass das CO2-Gas einem Druckniveau entspricht, um das Aquarium ohne weitere Komplikationen mit CO2, das einen Begasungsdruck aufweist, begasen zu können.

Da ohne Lichteinfall in ein Aquarium der Photosynthese-Prozess der darin befindlichen Pflanzen aussetzt, ist es üblich, dass die Zugabe von CO2-Gas während der Nachtstunden pausiert wird. Dies geschieht bei CO2-Druckkartuschen in der Regel durch ein Unterbrechen des Gasflusses im Leitungsverlauf, und somit der CO2-Gaszufuhr. Dieses Pausieren kann beispielhaft durch ein Magnetventil erfolgen.

Zur pH-Wert-Regulierung mit CO2-Druckkartuschen wird die gleiche Technik angewandt, jedoch wird die CO2-Gaszufuhr nicht im Tag/Nacht-Intervall geschaltet, sondern das Pausieren der CO2-Gaszufuhr wird durch eine Regelungselektronik gesteuert, wobei durch eine Permanentmessung des pH-Wertes die Schaltintervalle bestimmt werden.

Bei der Lagerung, beim Betreiben und beim Transport von CO2-Druckkartuschen sind einschlägige Sicherheitsbestimmungen einzuhalten, wobei beispielhaft sicherzustellen ist, dass nationale Sicherheitsbestimmungen hinsichtlich der benutzten CO2-Druckkartuschen gültig ist.

Zum Befüllen von Mehrweg-CO2-Druckkartuschen sind diese an einen Befüllungsort zu transportieren und nach dem Befüllen wieder abzutransportieren. Auch der Transport der CO2-Druckkartuschen unterliegt sicherheitsrechtlichen Bestimmungen. Eine CO2-Druckkartusche verfügt in der Regel über eine Überdrucksicherung, um einen überhöhten Kartuschendruck zu vermeiden und die CO2-Druckkartusche zu schützen. Üblicherweise löst die Überdrucksicherung bei einem Kartuschendruck von etwa 58 bar aus.

CO2-Druckkartuschen mit beispielsweise über 50 Gramm CO2-Befüllung sind aufgrund von nationalen Sicherheitsbestimmungen oft nicht zentrallagerfähig und somit nicht für einen flächendeckenden Vertrieb mit der Verteilung an Einzelhändler geeignet.

Außer den vorstehenden Transport- und Logistikproblemen und den zu erfüllenden nationalen Sicherheitsbestimmungen hat die Nutzung von CO2-Druckkartuschen einen weiteren Nachteil. Zur CO2-Versorgung von Aquarien sind zusätzliche technische Einrichtungen zur Verringerung des Kartuschendrucks von bis zu 58 bar notwendig. Demnach ist der Begasungsdruck, also der Druck an einer Gasausströmeinrichtung, gegenüber dem Kartuschendruck, also dem Druck in der CO2-Druckkartusche, zu reduzieren. Dies ist erforderlich, um die benötigte CO2-Menge präzise zu regulieren und um das Aquarium nicht derart mit Strömungen zu verwirbeln, dass die darin lebenden Tiere geschädigt würden. Weiterhin würden die im Aquarium lebenden Tiere durch eine unkontrollierte CO2-Zufuhr zu viel CO2 und somit zu wenig Sauerstoff, O2, erhalten, wodurch diese ersticken könnten. Die hierzu verwendeten Druckminderer erhöhen die Kosten des CO2-Kartuschensystems zusätzlich.

Andererseits kann CO2-Gas auf biologischem Wege vor Ort, also beim Endverbraucher, selbst produziert und in die zu versorgenden Aquarien geleitet werden. Hierzu weisen CO2-Gärsysteme üblicherweise Gärbehälter aus Kunststoff auf, die in der Regel mit einem zuckerhaltigen Nährsubstrat befüllt werden. Durch die Zugabe von Hefe wird ein Gärprozess in Gang gesetzt, bei welchem CO2-Gas freigesetzt wird. Der Vorteil dieses Verfahrens liegt darin, dass keine CO2-Druckkartuschen befüllt und transportiert werden müssen. Der Nachteil liegt darin, dass die CO2-Gaszufuhr nicht oder nur unzureichend dosiert werden kann und auch kein temporäres Pausieren des Gärprozesses möglich ist. Ein Pausieren des CO2-Austrittes würde zu einem unkontrollierten Druckanstieg im Gärbehälter führen. Der Druckanstieg führt im schlimmsten Falle sogar zu einem Bersten des Gärbehälters. Das durch den Gärprozess erzeugte CO2-Gas wird ohne eine dosierende Gasausströmeinrichtung aus dem Gärbehälter in das Aquarium geleitet. Eine Dosierung würde gegebenenfalls zu einem zu starken Druckanstieg führen, da durch den Gärprozess möglicherweise mehr CO2-Gas entstehen könnte als durch eine dosierende Gasausströmeinrichtung abgeführt würde. Aufgrund dieser Nachteile wird das Verfahren hauptsächlich bei weniger anspruchsvollen Aquarien angewandt, bei welchen eine Dosierung der zugegebenen CO2-Menge nicht nötig ist, oder bei welchen sichergestellt ist, dass eine CO2-Überdosierung aufgrund der im Verhältnis zum Aquarienwasser geringen eingebrachten CO2-Menge nicht möglich ist. Dies bedeutet allerdings, dass eine ständige CO2-Unterdosierung droht. Somit ist das vorbekannte Gärverfahren auch für eine zuverlässige pH-Wert-Regulierung ungeeignet.

DE 299 02 414 U1 offenbart ein Gerät zur Erzeugung von Kohlendioxid mit einer konstanten Rate. Dabei wird in einem Druckbehälter Kohlendioxid durch alkoholische Gärung erzeugt. An einem druckbehälterexternen Druckregler, welcher mit dem Druckbehälter fest verbunden ist, ist ein Präzisionsventil zur Erzielung einer konstanten Durchflussmenge angeschlossen. Voraussetzung dafür ist, dass die Entnahmemenge unter der maximalen Generationsleistung der Gärung liegen muss. Ein zusätzliches Überdruckventil, welches am Druckbehälter angeordnet ist, soll im Falle, dass der Druck durch eine Fehlfunktion unerwartet hoch ansteigt, den Druckbehälter vor dem Bersten schützen. Das Überdruckventil ist insofern nur für Fehlfunktionen vorgesehen, als es grundsätzlich nicht zum Einsatz kommt, da vorher die Kohlendioxiderzeugung wegen eines entsprechend hohen Drucks im Druckbehälter gehemmt wird, sodass der Gasbehälterdruck nicht weiter ansteigt.

JP H07 203805 A offenbart eine Vorrichtung zur Versorgung eines Zieraquariums mit einem Gas, vorzugsweise Kohlendioxid oder Luft, wobei dem Aquarium über das Gas ein Mischmittel mit einer desodorierenden und/oder die Wasserqualität verbessernden Wirkung zugeführt wird. Bei der Begasung des Aquariums mit Kohlendioxid wird zusätzlich über einen CO2-Speicher-Behälter ein körniges Deodorant als Mischmittel dem Aquariumwasser A hinzugefügt. Dazu weist der CO2-Speicher-Behälter eine obere Öffnung, in der ein manuelles Steuerventil angeordnet ist, auf. Durch die Betätigung des Steuerventils wird die Zufuhrmenge von Kohlendioxid über eine seitliche Anschlussöffnung eingestellt. Über eine mit der Anschlussöffnung verbundene Zuführungsleitung und Zuführungsvorrichtung wird das ausströmende Kohlendioxid in den Wassertank des Aquariums geleitet.

### Beschreibung der Erfindung

Ausgehend von dieser Situation ist es eine Aufgabe der vorliegenden Erfindung, einen Aquariendruckgasbehälter zur Verfügung zu stellen, der die vorgenannten Nachteile überwindet.

Insbesondere kann die Aufgabe einen kostengünstigen Aquariendruckgasbehälter betreffen, welcher in ihm freigesetztes CO2-Gas aufweist, wobei die CO2-Gaszufuhr in ein Aquarium ohne hohes Risiko pausierbar ist.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Insbesondere wird die Aufgabe demnach gelöst durch einen Aquariendruckgasbehälter zur Versorgung eines Aquariums mit im Aquariendruckgasbehälter erzeugtem CO2-Gas, der Aquariendruckgasbehälter aufweisend:
- ein Aufnahmegefäß zur Aufnahme eines Nährsubstrats und eines mit dem Nährsubstrat wechselwirkenden Reaktionsmittel derart, dass das Nährsubstrat und das Reaktionsmittel miteinander reagieren, um CO2-Gas zu erzeugen;
- eine Verschließeinrichtung zum druckdichten Verschließen des Aufnahmegefäßes;
- eine Gasausströmeinrichtung zur, insbesondere pausierbaren, CO2-Gas-Entnahme aus dem Aquariendruckgasbehälter für das Aquarium, wobei das CO2-Gas beim Einströmen in die Gasausströmeinrichtung einen gewünschten Begasungsdruck aufweist;
- einen Gasbehälterdruckregler, der dazu ausgelegt ist einen Gasbehälterdruck derart einzustellen, dass er dem gewünschten Begasungsdruck im Wesentlichen entspricht.

Nachfolgend werden vorteilige Aspekte der beanspruchten Erfindung erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

In anderen Worten ist insbesondere vorgesehen, dass nunmehr ein Aquariendruckgasbehälter für ein CO2-Begasungssystem, und das CO2-Begasungssystem selbst, zur Versorgung eines anspruchsvollen Aquariums verfügbar sind, wobei eine präzise CO2-Regelung und ein sicheres Pausieren der CO2-Gaszufuhr erfolgen kann. Das CO2-Begasungssystem funktioniert ohne den Einsatz eines zusätzlichen Druckminderers, da der im Aquariendruckgasbehälter entstehende Gasbehälterdruck dem gewünschten Begasungsdruck zur präzisen CO2-Gaszufuhr entspricht und somit nicht reduziert werden muss. Durch die CO2-Erzeugung steigender Überdruck kann demgegenüber beispielhaft mittels eines Gasbehälterdruckreglers abgebaut werden. Somit entsprechen sich Gasbehälterdruck und Begasungsdruck optimalerweise stets. Der Gasbehälterdruck ist üblicherweise nur dann reduziert, wenn der Gärprozess beginnt oder wenn das Nährsubstrat, beispielsweise zuckerhaltiges Nährsubstrat, und/oder das Reaktionsmittel, beispielsweise Hefe, nicht weiter nutzbar ist/sind, insbesondere aufgebraucht ist/sind. Anders formuliert ist der Gasbehälterdruck insbesondere zum Anfang und/oder zum Ende des Gärprozesses reduziert.

Das Aufnahmegefäß weist einen Raum zur Aufnahme des Nährsubstrats und des mit dem Nährsubstrat wechselwirkenden Reaktionsmittel auf. Dabei kann das Aufnahmegefäß beispielsweise innerhalb seines Raums noch ein weiteres, vorzugsweise herausnehmbares, Gefäß zur Aufnahme des Nährsubstrats und des mit dem Nährsubstrat wechselwirkenden Reaktionsmittel aufweisen. Hierdurch wird der Austausch von Nährsubstrat und Reaktionsmittel erleichtert. Es ist alternativ bevorzugt jedoch auch möglich, dass das Aufnahmegefäß selbst das Nährsubstrat und das Reaktionsmittel aufnimmt, sodass Nährsubstrat und Reaktionsmittel nur durch die mindestens eine Wandung des Aufnahmegefäßes von der Umwelt getrennt sind.

Die Verschließeinrichtung zum druckdichten Verschließen des Aufnahmegefäßes kann beispielsweise ein Deckel sein. Dieser kann gänzlich vom Aufnahmegefäß lösbeziehungsweise entfernbar sein.

Es ist alternativ bevorzugt auch möglich, dass die Verschließeinrichtung beweglich, beispielsweise schwenkbar, mit dem Aufnahmegefäß verbunden ist.

Alternativ bevorzugt können das Aufnahmegefäß und die Verschließeinrichtung derart eingerichtet sein, dass das Aufnahmegefäß beispielsweise eine Ausnehmung, insbesondere seitlich angeordnet, aufweist und dass die Verschließeinrichtung deckend zu dieser Ausnehmung ausgebildet ist, beispielsweise als druckdichter Plattenverschluss.

Die Gasausströmeinrichtung hat die präzise Einstellung beziehungsweise Dosierung des aus dem Aquariendruckgasbehälter strömenden CO2-Gases zur Funktion und dient nicht als Druckminderer. Sofern der Gasbehälterdruck geändert werden sollte, so passiert dies in einem vernachlässigbaren Maß. Die dosierende Gasausströmeinrichtung kann beispielhaft ein Nadelventil sein. Die Gasausströmeinrichtung weist insbesondere keine Überdrucksicherung auf.

Dass das CO2-Gas beim Einströmen in die Gasausströmeinrichtung einen Begasungsdruck aufweist bezieht sich auf jenen Druck, mit dem das CO2-Gas in das Aquarium einströmen kann ohne Schäden anzurichten. Die Gesamtformulierung ist derart zu interpretieren, dass das CO2-Gas bereits den Begasungsdruck aufweist, wenn es in die Gasausströmeinrichtung einströmt. Anders formuliert bedeutet dies, dass zwischen dem CO2-Austrittsbereich des Aufnahmegefäßes und/oder der Verschließeinrichtung und der Gasausströmeinrichtung kein Druckminderer zwischengeschaltet ist. Mithin strömt das CO2-Gas direkt aus dem Raum, in dem es der Gärprozess erfolgt, in die Gasausströmeinrichtung.

Der Gasbehälterdruckregler kann unterschiedlich ausgebildet sein. Relevant ist jedoch, dass er den Gasbehälterdruck derart einstellt, dass er im Wesentlichen dem gewünschten Begasungsdruck entspricht. Der Gasbehälterdruckregler ist insbesondere permanent betätigbar. Während somit beispielsweise bei konventionellen CO2-Druckkartuschen ein Druckminderer den Gasbehälterdruck nur dann auf den Begasungsdruck reduziert, wenn CO2-Gas in das Aquarium einströmt, wird der Gasbehälterdruck durch den Gasbehälterdruckregler permanent auf dem Begasungsdruck gehalten.

Somit erfährt der Raum, in dem es der Gärprozess erfolgt, keinen Gasbehälterdruck, der zum Beispiel den Gärprozess infolge des Überdrucks unterbricht, selbst wenn die CO2-Gas-Entnahme durch die Gasausströmeinrichtung pausiert wird. Sobald der Gasbehälterdruck durch den gestarteten Gärprozess erstmal erreicht ist, steht folglich der Begasungsdruck unmittelbar zur Verfügung.

Dass der Gasbehälterdruck im Wesentlichen dem Begasungsdruck entspricht bedeutet insbesondere, dass der Gasbehälterdruck höchstens einschließlich 20 Prozent, bevorzugt höchstens einschließlich 15 Prozent, besonders bevorzugt höchstens einschließlich 10 Prozent, ganz besonders bevorzugt höchstens einschließlich 5 Prozent, vom Begasungsdruck abweicht. Dabei kann vorzugsweise der Gasbehälterdruck als Basiswert gesehen werden. Alternativ kann der Begasungsdruck als Basiswert gesehen werden. Vorzugsweise sind der Gasbehälterdruck und der Begasungsdruck gleich. Mit geringer werdender Abweichung lässt sich das CO2-Gas besser in der Gasausströmeinrichtung zum Einströmen in das Aquarium dosieren.

Die Druckwerte sind vorliegend in der Einheit bar angegeben. In diesem Kontext beträgt der mittlere Luftdruck der Atmosphäre, auch atmosphärischer Druck genannt, vorzugsweise als Referenzwert für den Umgebungsdruck auf Meereshöhe 101325 Pa, also 101,325 kPa, also 1013,25 hPa, also 1 bar.

Nach dem Internationalen Einheitensystem (Si) gilt, dass 1 bar genau 10^5 Pascal entspricht, sodass dies vereinfacht und bevorzugt für den Umgebungsdruck angenommen werden kann.

Die Druckwerte innerhalb der Gesamtoffenbarung können entsprechend nach einer der obigen Ausführungen umgerechnet werden.

Die Druckwerte gelten bevorzugt bei Raumtemperatur, besonders bevorzugt bei 21 Grad Celsius.

Sämtliche Prozentwerte beziehen sich auf Druckwerte.

Der Gasbehälterdruck und der Begasungsdruck gelten im Rahmen der Gesamtoffenbarung jeweils als Überdruck. Dies bedeutet, dass die bevorzugten Drucke gegenüber dem Umgebungsdruck, welcher üblicherweise 1 bar beträgt, hinzuzurechnen sind. Beispielsweise bedeutet dies, dass ein Gasbehälterdruck von 0,8 bar bei einem Umgebungsdruck von 1 bar, einem gesamten Gasbehälterdruck von 1,8 bar entspricht. Dies gilt insbesondere für sämtliche Gasbehälter- und der Begasungsdrucke.

Auch bedeutet dies insbesondere, dass der Gasbehälterdruck sowie der Begasungsdruck vordefiniert sind und durch den Gasbehälterdruckregler an der oberen Grenze limitiert werden.

Mit Vorteil können das Nährsubstrat und/oder das Reaktionsmittel selbst in den Aquariendruckgasbehälter gegeben werden. Ein Transport des Aquariendruckgasbehälters ist somit überflüssig.

Vorzugsweise ist das Nährsubstrat ein zuckerhaltiges Nährsubstrat. Alternativ oder zusätzlich ist bevorzugt, dass das Reaktionsmittel Hefe ist. Sofern das Nährsubstrat ein zuckerhaltiges Nährsubstrat und das Reaktionsmittel Hefe ist, kann CO2-Gas im Rahmen eines allgemein bekannten Gärprozesses erzeugt werden. Ein Vorteil liegt darin, dass das Nährsubstrat und das Reaktionsmittel durch Haushaltsmittel, nämlich beispielsweise durch Zuckerwasser und Hefe, bereitgestellt werden können. Von Vorteil ist jedoch ein gelartiges zuckerhaltiges Nährsubstrat, da dieses das CO2-Gas gleichmäßiger erzeugt.

Die Erfindung betrifft somit einen Aquariendruckgasbehälter als Gärbehälter für eine biologische und/oder chemische CO2-Erzeugung, insbesondere mittels Hefe. Dabei ist es möglich, entstehendes CO2-Gas beim Absperren der Gasausströmeinrichtung innerhalb des Aquariendruckgasbehälters unter Druckaufbau zu halten. Dies ermöglicht ein beliebig häufiges Pausieren und Öffnen der Gasausströmeinrichtung zur CO2-Entnahme. Somit wird das im Aquariendruckgasbehälter erzeugte CO2-Gas verlässlich auch für die quantitativ bestimmte CO2-Zugabe verfügbar gemacht. Das Gärverfahren, oder ein anderes Verfahren zur CO2-Erzeugung, kann durch den Einsatz des Aquariendruckgasbehälters die CO2-Druckkartuschen zur CO2-Zugabe in Aquarien ersetzen. Über beispielsweise einen oder mehrere Gasbehälterdruckregler, wird oder werden hierbei ein Ansteigen des Gasbehälterdruckes über den gewünschten Begasungsdruck hinaus innerhalb des Behälters verhindert. Der Gasbehälterdruckregler, insbesondere als Überdruckventil ausgebildet, dient beim Einsatz in der Erfindung zur Voreinstellung des Gasbehälterdrucks und nicht als Schutz des Aquariendruckgasbehälters. Das erzeugte CO2-Gas wird auf einen für die weitere Verwendung günstigen Begasungsdruck voreingestellt. Das überschüssige CO2-Gas wird hierbei durch den Gasbehälterdruckregler in die Umgebungsluft abgegeben und der Gasbehälterdruck somit auf einem gleichmäßigem Niveau gehalten.

Da sich ein im Vergleich zum CO2-Kartuschensystem geringerer Überdruck im Aquariendruckgasbehälter aufbaut, ist eine regelmäßige Begutachtung des Behälters hinsichtlich der nationalen Sicherheitsbestimmungen nicht erforderlich. Die Erfindung löst das Problem der Lagerung und des Transportes, indem nach Aufbrauch der im Behälter befindlichen Komponenten zur CO2-Erzeugung, der Inhalt des Behälters leicht ausgetauscht werden kann, um eine erneute CO2- Erzeugung zu starten. Die nachzufüllenden Komponenten sind haushaltsüblich und unterliegen keinen Beschränkungen bei Lagerung und Transport.

Eine Kombination der beiden vorbekannten Systeme, nämlich eine bereits bekannte CO2-Erzeugung mittels eines Nährsubstrats kombiniert mit einem vorbekannten System mit einer eingangs erwähnten CO2-Druckkartusche und mit einer konventionellen Überdrucksicherung, würde beim vorliegenden Aquariendruckgasbehälter nicht funktionieren. Der Gasbehälterdruck würde stetig steigen. Dann würde allerdings wegen des hohen Gasbehälterdrucks ebenfalls ein konventioneller kostenintensiver Druckminderer benötigt, da andernfalls der Begasungsdruck und somit die CO2-Gaszufuhr in das Aquarium zu hoch wären.

In anderen Worten kann der Gedanke angeführt werden, dass das Prinzip der Flaschengärung zur CO2-Gaszufuhr in das Aquarium in modifizierter Weise genutzt wird.

Ein Aspekt der Erfindung liegt darin, dass der Gasbehälterdruckregler als Druckminderer genutzt wird, welcher bevorzugt den Gasbehälterdruck als Überdruck gegenüber einem Umgebungsdruck von zwischen einschließlich 0,6 bar bis einschließlich 1,0 bar, besonders bevorzugt auf 0,8 bar, begrenzt. Der auf die vorgeschlagene Weise regulierte Gasbehälterdruck ermöglicht die Bevorratung von CO2-Gas in begrenztem Umfang, soweit dies im Wesentlichen das Aufnahmegefäß ermöglicht, sowie eine zuverlässig einstellbare Feinregulierungsmöglichkeit der CO2-Gaszufuhr in das Aquarium. Auch können CO2-Diffusoren mit einem Durchströmungswiderstand von beispielsweise 0,3 bis 0,6 bar als Überdruck gegenüber einem Umgebungsdruck ohne Probleme betrieben werden.

In einem geschlossenen Aquariendruckgasbehälter ohne Überdrucksicherung und mit dem Nährsubstrat und dem Reaktionsmittel würde der stetig steigende Gasbehälterdruck beispielsweise irgendwann dazu führen, dass die CO2-Erzeugung aufgrund des zu hohen Gasbehälterdrucks eingestellt wird. Schlimmstenfalls könnten insbesondere das Nährsubstrat und/oder das Reaktionsmittel durch den hohen Gasbehälterdruck derart beeinflusst werden, dass eine CO2-Erzeugung auch bei einem anschließend abfallendem Gasbehälterdruck nicht weiter möglich ist, sodass eventuell ein zumindest teilweiser Austausch von Nährsubstrat und/oder Reaktionsmittel erforderlich werden könnte. Der Einsatz des Gasbehälterdruckreglers verhindert einen derart unkontrollierten Anstieg des CO2-Gehaltes innerhalb des Aquariendruckgasbehälters und ermöglicht so eine länger andauernde CO2-Erzeugung von bis zu beispielsweise 30 bis 40 Tagen. Der begrenzende Faktor zur Erhaltung der Funktionsfähigkeit der der eingesetzten Mikroorganismen, ist insbesondere nicht der steigende CO2-Gehalt der im Behälter befindlichen Flüssigkeit, welcher für ein Absterben der Mikroorganismen sorgen würde, sondern der sich anreichernde Alkoholgehalt oder der Aufbrauch der enthaltenen Nährstoffe. Das Flüssigkeitsvolumen kann so bemessen werden, dass der maximal entstehende Alkoholgehalt ebenfalls nicht zum begrenzenden Faktor wird und somit der gesamte Nährstoffgehalt aus der Flüssigkeit zur CO2-Erzeugung genutzt werden kann, bevor die Mikroorganismen zum Beispiel durch Nährstoffmangel absterben.

Insbesondere kann der Aquariendruckgasbehälter einen oder mehrere Gasbehälterdruckregler aufweisen, welche/r voreingestellt ist/sind einen Überdruck innerhalb des Aquariendruckgasbehälters entstehen zu lassen, welcher dem idealen, oder dem nahezu idealen oder dem annähernd idealen Vordruck zur Dosierung des CO2-Gases mittels einer nachgeschalteten Gasausströmeinrichtung als Dosiervorrichtung entspricht.

Dem Fachmann ist verständlich, dass der Gasbehälterdruck beziehungsweise der Begasungsdruck nicht permanent anliegen. Sofern Drucke oder Reaktionen genannt werden, so gilt dies, soweit die Logik es nicht anders nahelegt, für den Zustand, dass eine stabile CO2-Erzeugung durch das Nährsubstrat und das Reaktionsmittel erfolgt. Real entspricht der Verlauf der CO2-Erzeugung einer Gauß-Kurve. Im Aquariendruckgasbehälter ist der Verlauf des Gasbehälterdrucks im mittleren Bereich etwas stabiler. Sobald Nährsubstrat und das Reaktionsmittel im Aquariendruckgasbehälter zusammengegeben werden, setzt zeitnah die Gärung und somit die CO2-Erzeugung ein. Sobald der gewünschte Gasbehälterdruck beziehungsweise Begasungsdruck erreicht ist, bleibt dieser im Aquariendruckgasbehälter weitestgehend stabil. Sobald die Gärungskomponenten aufgebraucht sind, reduziert sich die Menge des erzeugten CO2.

Gemäß einer modifizierten Ausführungsform der Erfindung ist vorgesehen, dass der Gasbehälterdruckregler derart ausgebildet ist, dass der Gasbehälterdruck einen Überdruck gegenüber einem Umgebungsdruck von mindestens einschließlich 0,3 bar, bevorzugt mindestens einschließlich 0,5 bar, besonders bevorzugt mindestens einschließlich 0,6 bar aufweist. Dies entspricht einem bevorzugten Begasungsdruck, um das Aquarium mit ausreichend CO2-Gas zu begasen. Da sich der Gasbehälterdruck und der Begasungsdruck im Wesentlichen entsprechen, wird durch den vorteilig ausgebildeten Gasbehälterdruckregler eine ausreichende CO2-Zufuhr in das Aquarium ermöglicht.

Alternativ bevorzugt ist vorgesehen, dass der Gasbehälterdruckregler derart ausgebildet ist, dass der Gasbehälterdruck einen Überdruck gegenüber einem Umgebungsdruck von mindestens einschließlich 0,8 bar aufweist. Es hat sich herausgestellt, dass dies ein besonders bevorzugter Wert ist, um das Aquarium optimal mit CO2-Gas zu versorgen, sodass bei konventionellen Aquarien ein ökosystemgünstiger pH-Wert eingestellt wird.

Gemäß einer modifizierten Ausführungsform der Erfindung ist vorgesehen, dass der Gasbehälterdruckregler derart ausgebildet ist, dass der Gasbehälterdruck einen Überdruck gegenüber einem Umgebungsdruck von höchstens einschließlich 3,0 bar, bevorzugt höchstens einschließlich 1,0 bar, besonders bevorzugt höchstens einschließlich 0,9 bar aufweist. Dies entspricht einem bevorzugten Begasungsdruck, um das Aquarium mit ausreichend CO2-Gas zu begasen. Da sich der Gasbehälterdruck und der Begasungsdruck im Wesentlichen entsprechen, wird durch den vorteilig ausgebildeten Gasbehälterdruckregler eine optimale CO2-Zufuhr in das Aquarium ermöglicht ohne das Wasser des Aquariums ökosystemschädigend zu verwirbeln oder durch zu viel CO2-Gas den pH-Wert negativ zu beeinflussen.

Alternativ bevorzugt ist vorgesehen, dass der Gasbehälterdruckregler derart ausgebildet ist, dass der Gasbehälterdruck einen Überdruck gegenüber einem Umgebungsdruck von höchstens einschließlich 0,8 bar aufweist. Es hat sich herausgestellt, dass dies ein besonders bevorzugter Wert ist, um das Aquarium optimal mit CO2-Gas zu versorgen, sodass bei konventionellen Aquarien ein ökosystemgünstiger pH-Wert eingestellt wird.

Gemäß einer modifizierten Ausführungsform der Erfindung ist vorgesehen, dass die Gasausströmeinrichtung ein Nadelventil aufweist. Ein bevorzugtes Nadelventil ist ein Ventiltyp mit einer kleinen Öffnung und einem mit Gewinde versehenen, nadelförmigen Ventilkolben. Es ermöglicht eine präzise Regulierung der Strömung. Der Ventilkolben kann durch das Gewinde längs bewegt werden. Dabei vergrößert oder verkleinert die nadelförmige Spitze die Öffnung des Ventils nur wenig, da die Nadel schon für kleine Änderungen relativ weit bewegt werden muss. Durch den kleinen Kegelwinkel der Nadel erreicht man so eine sehr empfindliche Einstellung des Durchflusses. Packungsgedichtete Ventile sind dynamisch gedichtete Ventile. Dynamische Abdichtung bedeutet, dass eine Relativbewegung zwischen dem Dichtkörper (Spindel/Kugel/Küken) und dem Dichtungsmaterial möglich ist. Letzteres wird auch Packung genannt. Typische Dichtmaterialien sind Teflon oder O-Ringe aus Perbunan, Viton, EPR/EPDM, Kalrez bei Standardventilen oder PEEK. Diese Ventiltypen besitzen ab Werk eine Schmierung auf Silikonbasis. Dies erhöht die Lebensdauer der Packung, minimiert den Abrieb im Ventil und senkt das erforderliche Betätigungsmoment.

Gemäß einer modifizierten Ausführungsform der Erfindung ist vorgesehen, dass der Gasbehälterdruckregler ein Sicherheitsventil aufweist. Bevorzugte Sicherheitsventile, auch Überdruckventile genannt, gehören zu den Sicherheitsarmaturen nach DIN EN 806-1 bzw. DIN 3211 und schützen den druckbeaufschlagte Aquariendruckgasbehälter vor einem ungewünschten Gasbehälterdruckanstieg. Die Normen sind gemeint in der aktuell gültigen Fassung, zumindest jedoch gemäß der Fassung zum Anmeldetag. Bei Überschreiten des vordefinierten Behälterdruckes wird CO2-Gas in die Atmosphäre oder in Sammelrohrleitungen abgeleitet.

Gemäß einer modifizierten Ausführungsform der Erfindung ist vorgesehen, dass der Aquariendruckgasbehälter eine Öffnungssicherung aufweist, um im Falle einer Betätigung den Gasbehälterdruck auf den Umgebungsdruck anzupassen. Sofern der Aquariendruckgasbehälter unter Druck steht, kann ein Öffnen erschwert oder gar riskant sein. Wird die Öffnungssicherung jedoch betätigt, fällt der Gasbehälterdruck auf den Umgebungsdruck ab, sodass die Verschließeinrichtung ohne erhöhtes Risiko geöffnet werden kann.

Gemäß einer modifizierten Ausführungsform der Erfindung ist vorgesehen, dass der Aquariendruckgasbehälter wiederverwendbar ist, wobei insbesondere das Aufnahmegefäß mit der Verschließeinrichtung druckdicht wiederverschließbar ist. Dies ist besonders umweltschonend. Üblicherweise sind Gärbehälter Einwegartikel. Dadurch, dass die Verschließeinrichtung druckdicht wiederverschließbar ist, kann der Aquariendruckgasbehälter umweltschonend wiederverwendet werden.

Gemäß einer modifizierten Ausführungsform der Erfindung ist vorgesehen, dass die Verschließeinrichtung als Schraubdeckel ist. Dies ermöglicht eine günstige Ausführungsform des Aquariendruckgasbehälters, wobei eine zuverlässige Dichtung auch nach vielen Begasungszyklen ermöglicht wird.

Gemäß einer alternativen modifizierten Ausführungsform der Erfindung ist vorgesehen, dass die Verschließeinrichtung als Stülpdeckel ausgebildet ist. Vorzugsweise weist der Stülpdeckel bewegliche Verschlussklammern auf, die mit dem entsprechend ausgebildeten Aufnahmegefäß formschließend wechselwirken. Es hat sich herausgestellt, dass das dieses Formschlussprinzip auch bei geringen Drücken den Aquariendruckgasbehälter vorteilig abdichtet. Insbesondere weist der Stülpdeckel eine Drehverschließmechanismus auf, welcher bevorzugt koaxial zur Verschließeinrichtung, also mit gleicher Rotationsachse, angeordnet ist. Sofern der Drehverschließmechanismus betätigt wird, festigen oder lösen die Verschlussklammern die Verbindung zwischen dem Aufnahmegefäß und der Verschließeinrichtung. Dies ermöglicht eine leichte Bedienung des Aquariendruckgasbehälters, wobei eine zuverlässige Dichtung auch nach vielen Begasungszyklen ermöglicht wird.

Gemäß einer modifizierten Ausführungsform der Erfindung ist vorgesehen, dass die Gasausströmeinrichtung einen Absperrmechanismus aufweist, um die CO2-GasEntnahme zu stoppen. Der Absperrmechanismus kann beispielsweise betätigt werden, wenn die im Aquarium befindlichen Pflanzen keine Sonnenstrahlen für die Photosynthese erhalten, beispielsweise nachts. Hierdurch kann verhindert werden, dass sich der pH-Wert im Aquarium negativ entwickelt, zumal Pflanzen nachts sogar CO2-Gas emittieren können. Dabei ansteigender Gasbehälterdruck kann durch den Gasbehälterdruckregler reguliert werden.

Der Absperrmechanismus kann beispielhaft ein elektrisch betriebenes Magnetventil umfassen. Das Magnetventil kann auch alternativ oder zusätzlich zum Absperrmechanismus vorhanden sein.

Gemäß einer modifizierten Ausführungsform der Erfindung ist vorgesehen, dass die Gasausströmeinrichtung eine Begasungsblasendetektionsvorrichtung aufweist, um die Menge des in die Gasausströmeinrichtung einströmenden CO2-Gas zu detektieren. Die Begasungsblasendetektionsvorrichtung kann beispielsweise ein Blasenzähler sein. Ein Blasenzähler verwendet man konventionell im chemischen Labor bei experimentellen Arbeiten mit Gasen, um die Stärke des Gasstromes zu überprüfen. Aus dem Einleitungsrohr treten Blasen von gleichmäßiger Größe aus, die bei nicht zu großem Gasstrom gezählt werden können. Die Anzahl der Blasen pro Zeitspanne ist ein Maß für die Menge des durch die Apparatur strömenden CO2-Gases. Wenn sich die Anzahl der Blasen pro Zeitspanne reduziert, kann dies ein Indiz dafür sein, dass das Nährsubstrat und/oder das Reaktionsmittel wegen ihres fortschreitenden Aufbrauchs weniger CO2-Gas erzeugen bis sie gar kein CO2-Gas mehr erzeugen. Wenn beispielsweise eine Blase pro zwei Sekunden und nicht mehr pro Sekunde detektiert werden, kann der Endverbraucher daraus herleiten, dass er neues Nährsubstrat und/oder neues Reaktionsmittel beschaffen soll. Hierdurch wird sichergestellt, dass die Zeit ohne CO2-Erzeugung möglichst gering ausfällt. Die blasenweise Dosierung ist zudem sachdienlich, um CO2-Diffusoren präzise betreiben zu können, welche mittels einer vorher zu berechnenden Dosierung, zugeführt über die Blasenmenge pro Zeiteinheit, eine konstante CO2-Sättigung des Aquarienwassers ermöglichen.

Der Absperrmechanismus kann beispielhaft mit der Begasungsblasendetektionsvorrichtung in einer Baugruppe angeordnet sein.

Gemäß einer modifizierten Ausführungsform der Erfindung ist vorgesehen, dass die Gasausströmeinrichtung am Aufnahmegefäß angeordnet ist, sodass das CO2-Gas aus dem Aufnahmegefäß in die Gasausströmeinrichtung einströmen kann. Die Verschließeinrichtung kann ohne die Gasausströmeinrichtung als sperrige Komponente leichter gelöst werden, um das Nährsubstrat und/oder das Reaktionsmittel auszutauschen.

Alternativ oder zusätzlich ist es möglich, dass die Gasausströmeinrichtung an der Verschließeinrichtung angeordnet ist, sodass das CO2-Gas aus der Verschließeinrichtung in die Gasausströmeinrichtung einströmen kann. Dies ist insbesondere dann eine sinnvolle Ausgestaltung, wenn die Verschließeinrichtung als oben liegender Deckel ausgebildet ist, sodass die Gasausströmeinrichtung von oben leicht zugänglich eingestellt werden kann.

Gemäß einer modifizierten Ausführungsform der Erfindung ist vorgesehen, dass der Aquariendruckgasbehälter eine Dichtung aufweist, die umfangsgemäß in einem Kopplungsbereich zwischen dem Aufnahmegefäß und der Verschließeinrichtung angeordnet ist, sodass im geschlossenem Zustand des Aquariendruckgasbehälters das druckdichte Verschließen des Aufnahmegefäßes dadurch entsteht, dass der Gasbehälterdruck die Dichtung in den Kopplungsbereich zwischen dem Aufnahmegefäß und der Verschließeinrichtung presst. Es hat sich herausgestellt, dass diese Art des Dichtungssystems, welches besonders bei erhöhtem Druck gut dichtet, eine langlebige Dichtung ermöglicht. Dabei kann die Dichtung, die umfangsgemäß in einem Kopplungsbereich zwischen dem Aufnahmegefäß und der Verschließeinrichtung angeordnet ist, als Ring verstanden werden. Dieser Ring presst sich in den Kontaktspalt zwischen dem Aufnahmegefäß und der Verschließeinrichtung. Je höher der Gasbehälterdruck ist, desto fester wird der Ring radial nach außen, und somit in den Kontaktspalt, gepresst.

Gemäß einer modifizierten Ausführungsform der Erfindung ist vorgesehen, dass die Gasausströmeinrichtung und der Gasbehälterdruckregler in einem gemeinsamen Modul angeordnet sind, das mit dem Aufnahmegefäß und/oder mit der Verschließeinrichtung verbunden ist. Insbesondere ist das Modul austauschbar. Wenn das Modul defekt ist, kann dieses somit leicht ausgetauscht werden. Weiterhin erhöht dies die Funktionalität des Aquariendruckgasbehälters. So kann es sein, dass die benötigte Menge des zugeführten CO2-Gas abhängig von den im Aquarium vorhandenen Pflanzen und/oder Lebewesen, insbesondere Fischen, ist. Ein Austausch beziehungsweise Einsatz des erforderlichen Moduls kann hier fachlich unerfahrenen Endverbrauchern eine einfache und fehlerquellenreduzierende Lösung bieten.

Gemäß einer modifizierten Ausführungsform der Erfindung ist vorgesehen, dass der Gasbehälterdruckregler mit dem Aufnahmegefäß und/oder mit der Verschließeinrichtung verbunden ist. Am Aufnahmegefäß unterliegt der Gasbehälterdruckregler wegen der Nichtbewegung einem reduzierten Risiko beschädigt zu werden, wenn die als Deckel ausgebildete Verschließeinrichtung vom Aquariendruckgasbehälter gelöst wird. Demgegenüber ist der Gasbehälterdruckregler am Verschließeinrichtung leichter auszutauschen, falls dies erforderlich ist, um beispielsweise einen neuen Gasbehälterdruck beziehungsweise Begasungsdruck einzustellen.

Vorteilhaft ist außerdem ein CO2-Begasungssystem mit einem Aquariendruckgasbehälter nach einem der vorgenannten Merkmale;
das CO2-Begasungssystem aufweisend
eine an der Gasausströmeinrichtung angeschlossene CO2-Begasungsleitung zur Versorgung des Aquariums mit dem im Aquariendruckgasbehälter erzeugten CO2-Gas;
wobei die CO2-Begasungsleitung ausgebildet ist, um an ihrem von der Gasausströmeinrichtung entfernten Ende in das Aquarium eingetaucht zu sein.

Bevorzugt weist die CO2-Begasungsleitung an ihrem von der Gasausströmeinrichtung entfernten Ende einen CO2-Diffusor auf, wobei der CO2-Diffusor besonders bevorzugt mit einem Durchströmungswiderstand von einschließlich 0,3 bar bis einschließlich 0,6 bar als Überdruck gegenüber einem Umgebungsdruck betreibbar ist. Es hat sich herausgestellt, dass das CO2-Gas hierdurch besser im Wasser des Aquariums gelöst werden kann.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine schematische Seitenansicht eines CO2-Kartuschensystems mit einer CO2-Druckkartusche zur CO2-Begasung eines Aquariums gemäß einem ersten Stand der Technik;
- Fig. 2: eine schematische Seitenansicht eines CO2-Gärsystems mit einem Gärbehälter zur CO2-Begasung eines Aquariums gemäß einem zweiten Stand der Technik;
- Fig. 3: eine schematische Seitenansicht eines CO2-Begasungssystems mit einem Aquariendruckgasbehälter zur CO2-Begasung eines Aquariums gemäß einem bevorzugten Ausführungsbeispiel der Erfindung,
- Fig. 4: eine schematische Seitenansicht eines Aquariendruckgasbehälter gemäß einem weiteren bevorzugten Ausführungsbeispiel der Erfindung, wobei der Aquariendruckgasbehälter alternativ zum Aquariendruckgasbehälter gemäß Figur 3 ausgebildet ist;
- Fig. 5: eine alternative schematische Seitenansicht des Aquariendruckgasbehälter gemäß Figur 4; und
- Fig. 6: eine schematische Draufsicht des Aquariendruckgasbehälter gemäß den Figuren 4 und 5.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

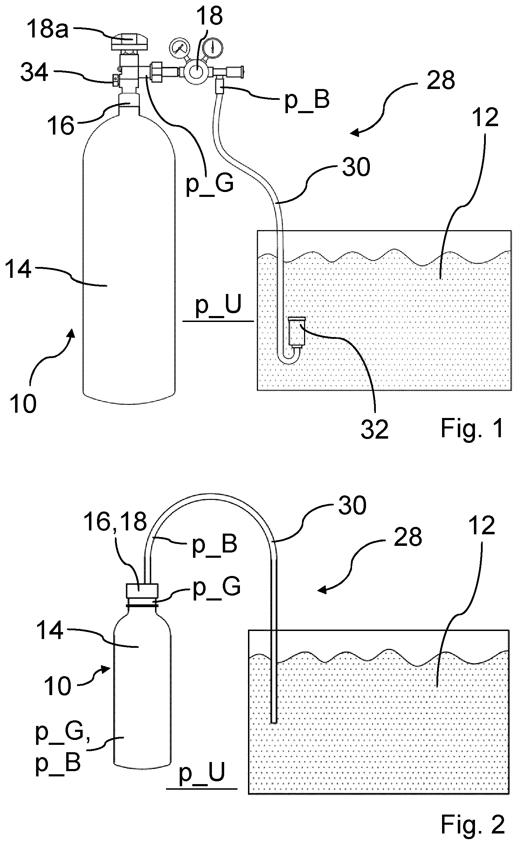

Figur 1 zeigt ein vorbekanntes CO2-Kartuschensystem als CO2-Begasungssystem 28.

Figur 2 zeigt ein vorbekanntes Gärsystem als CO2-Begasungssystem 28.

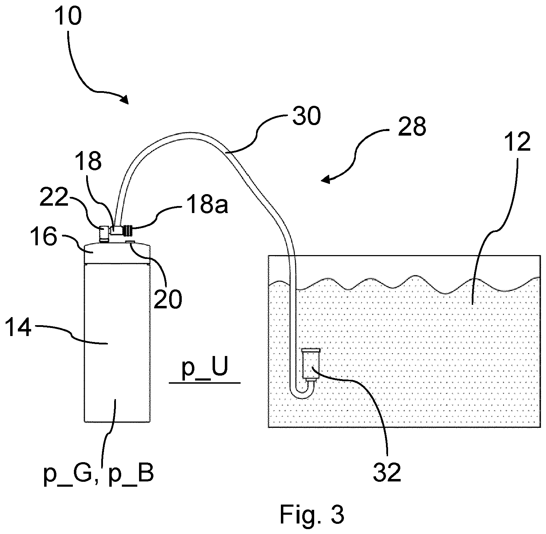

Figur 3 zeigt ein CO2-Begasungssystem 28 gemäß einem bevorzugten Ausführungsbeispiel der Erfindung. Dabei weist das CO2-Begasungssystem 28 nach Figur 3 einen Aquariendruckgasbehälter 10 nach einer ersten Ausführungsform auf.

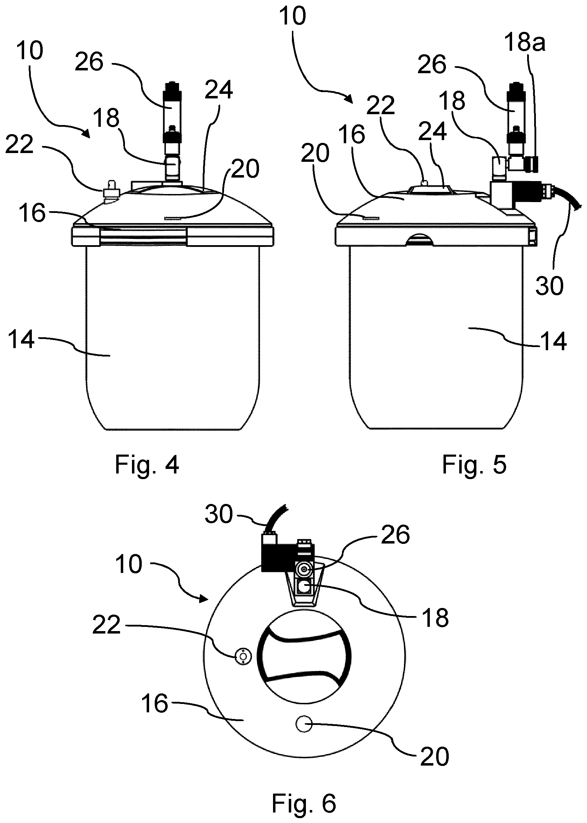

Die Figuren 4 zeigen einen Aquariendruckgasbehälter 10 nach einer zweiten Ausführungsform, wobei dieser Aquariendruckgasbehälter 10 auch beim CO2-Begasungssystem 28 nach Figur 3 genutzt werden kann. Die Figuren 4 und 5 zeigen den Aquariendruckgasbehälter 10 nach Ausführungsform 2 in zwei unterschiedlich gedrehten Positionen in einer Seitenansicht. Die Figur 6 offenbart den Aquariendruckgasbehälter 10 nach Ausführungsform 2 in einer Draufsicht.

Figur 1 zeigt ein CO2-Kartuschensystem als CO2-Begasungssystem 28 mit einer CO2-Druckkartusche als Aquariendruckgasbehälter 10. Der Aquariendruckgasbehälter 10 dient zur Versorgung eines Aquariums 12 mit CO2-Gas aus der CO2-Druckkartusche, welche als Aufnahmegefäß 14 ausgebildet ist, das mit CO2-Gas gefüllt ist.

Das Aufnahmegefäß 14 ist mit einer Verschließeinrichtung 16 druckdicht verschlossen. Die CO2-Druckkartusche verfügt über ein 58-bar-Überdruckventil 34, um einen überhöhten Kartuschendruck p_G zu vermeiden und die CO2-Druckkartusche zu schützen. Üblicherweise löst das 58-bar-Überdruckventil 34 bei einem Kartuschendruck p_G von etwa 58 bar aus. Um diesen Kartuschendruck p_G zu reduzieren weist eine Gasausströmeinrichtung 18 zur CO2-Gas-Entnahme aus der CO2-Druckkartusche für das Aquarium 12 einen kostenintensiven Druckminderer auf, sodass der Kartuschendruck p_G erheblich reduziert wird und einen Begasungsdruck p_B erreicht. Der Begasungsdruck p_B ist um ein Vielfaches kleiner als der Kartuschendruck p_G. Das CO2-Kartuschensystem weist eine an der Gasausströmeinrichtung 18 angeschlossene CO2-Begasungsleitung 30 zur Versorgung des Aquariums 12 mit dem CO2-Gas. Dabei ist die CO2-Begasungsleitung 30 ausgebildet, um an ihrem von der Gasausströmeinrichtung 18 entfernten Ende in das Aquarium 12 eingetaucht zu sein. Über einen Absperrmechanismus 18a kann die CO2-Gas-Entnahme aus der CO2-Druckkartusche gestoppt werden. Sobald das CO2-Gas vollständig aus der CO2-Druckkartusche herausgeströmt ist, ist die CO2-Druckkartusche zu einer CO2-Ladestation zu fahren und neu mit CO2-Gas zu befüllen.

Figur 2 zeigt ein als Gärsystem ausgebildetes CO2-Begasungssystem 28 mit einem Gärbehälter als Aquariendruckgasbehälter 10 zur Versorgung eines Aquariums 12 mit im Aquariendruckgasbehälter 10 erzeugtem CO2-Gas.

Das Gärsystem umfasst ein Aufnahmegefäß 14 zur Aufnahme eines Nährsubstrats und eines mit dem Nährsubstrat wechselwirkenden Reaktionsmittel derart, dass das Nährsubstrat und das Reaktionsmittel miteinander reagieren, um CO2-Gas zu erzeugen. Da das CO2-Gas jedoch sofort ausströmt, baut sich kein Gasbehälterdruck p_G im Gärbehälter auf.

Weiterhin umfasst das Gärsystem eine Verschließeinrichtung 16 zum Verschließen des Aufnahmegefäßes 14.

Die Verschließeinrichtung 16 ist weiterhin als Gasausströmeinrichtung 18 ausgebildet zur CO2-Gas-Entnahme aus dem Gärbehälter für das Aquarium 12, wobei das CO2-Gas beim Einströmen in die Gasausströmeinrichtung 18 einen Begasungsdruck p_B aufweist, der dem Gasbehälterdruck p_G entspricht.

Das Gärsystem weist keinen Absperrmechanismus auf, da dieser zu einem Bersten des Gärbehälters führen könnte.

Das Gärsystem umfasst eine an der Gasausströmeinrichtung 18 angeschlossene CO2-Begasungsleitung 30 zur Versorgung des Aquariums 12 mit dem im Aquariendruckgasbehälter 10 erzeugten CO2-Gas, wobei die CO2-Begasungsleitung 30 ausgebildet ist, um an ihrem von der Gasausströmeinrichtung 18 entfernten Ende in das Aquarium 12 eingetaucht zu sein.

Figur 3 zeigt ein bevorzugtes Ausführungsbeispiel eines CO2-Begasungssystems 28 mit einem beispielhaften Aquariendruckgasbehälter 10.

Der Aquariendruckgasbehälter 10 ist zur Versorgung eines Aquariums 12 mit im Aquariendruckgasbehälter 10 erzeugtem CO2-Gas ausgebildet.

Hierzu weist der Aquariendruckgasbehälter 10 auf:
- ein Aufnahmegefäß 14 zur Aufnahme eines Nährsubstrats und eines mit dem Nährsubstrat wechselwirkenden Reaktionsmittel derart, dass das Nährsubstrat und das Reaktionsmittel miteinander reagieren, um CO2-Gas zu erzeugen;
- eine Verschließeinrichtung 16 zum druckdichten Verschließen des Aufnahmegefäßes 14;
- eine Gasausströmeinrichtung 18 zur CO2-Gas-Entnahme aus dem Aquariendruckgasbehälter 10 für das Aquarium 12, wobei das CO2-Gas beim Einströmen in die Gasausströmeinrichtung 18 einen gewünschten Begasungsdruck p_B aufweist;
- einen Gasbehälterdruckregler 20, der dazu ausgelegt ist einen Gasbehälterdruck p_G derart einzustellen, dass er dem gewünschten Begasungsdruck p_B im Wesentlichen entspricht.

Das CO2-Begasungssystem 28 umfasst weiterhin eine an der Gasausströmeinrichtung 18 angeschlossene CO2-Begasungsleitung 30 zur Versorgung des Aquariums 12 mit dem im Aquariendruckgasbehälter 10 erzeugten CO2-Gas, wobei die CO2-Begasungsleitung 30 ausgebildet ist, um an ihrem von der Gasausströmeinrichtung 18 entfernten Ende in das Aquarium 12 eingetaucht zu sein.

Bevorzugt weist die CO2-Begasungsleitung 30 an ihrem von der Gasausströmeinrichtung 18 entfernten Ende einen CO2-Diffusor 32 auf, wobei der CO2-Diffusor 32 besonders bevorzugt mit einem Durchströmungswiderstand von einschließlich 0,3 bar bis einschließlich 0,6 bar als Überdruck gegenüber einem Umgebungsdruck p_U betreibbar ist.

Weiterhin bevorzugt, jedoch nicht genauer vorgestellt ist, dass der Gasbehälterdruckregler 20 derart ausgebildet ist, dass der Gasbehälterdruck p_G einen Überdruck gegenüber einem Umgebungsdruck p_U von mindestens einschließlich 0,3 bar, bevorzugt mindestens einschließlich 0,5 bar, besonders bevorzugt mindestens einschließlich 0,6 bar beträgt.

Weiterhin bevorzugt, jedoch nicht genauer vorgestellt ist, dass der Gasbehälterdruckregler 20 derart ausgebildet ist, dass der Gasbehälterdruck p_G höchstens einschließlich 3,0 bar, bevorzugt höchstens einschließlich 1,0 bar, besonders bevorzugt höchstens einschließlich 0,9 bar beträgt.

Besonders bevorzugt, jedoch nicht dargestellt, ist der Gasbehälterdruckregler 20 derart ausgebildet, dass der Gasbehälterdruck p_G als Überdruck gegenüber einem Umgebungsdruck p_U 0,8 bar beträgt. Anders formuliert, und als übergreifendes Beispiel, liegt der Gasbehälterdruck p_G um 0,8 bar über dem Umgebungsdruck p_U.

Weiterhin bevorzugt, jedoch nicht genauer vorgestellt ist, dass die Gasausströmeinrichtung 18 ein Nadelventil aufweist und/oder der Gasbehälterdruckregler 20 ein Sicherheitsventil aufweist.

Gemäß den Figuren 3 bis 6 ist bevorzugt, dass der Aquariendruckgasbehälter 10 eine Öffnungssicherung 22 aufweist, um im Falle deren Betätigung den Gasbehälterdruck p_G auf den Umgebungsdruck p_U anzupassen.

Gemäß den Figuren 3 bis 6 ist bevorzugt, dass der Aquariendruckgasbehälter 10 wiederverwendbar ist, wobei insbesondere das Aufnahmegefäß 14 mit der Verschließeinrichtung 16 druckdicht wiederverschließbar ist.

Gemäß Figur 3 ist bevorzugt, dass die Verschließeinrichtung 16 als Schraubdeckel ausgebildet ist.

Gemäß den Figuren 4 bis 6 ist bevorzugt, dass die Verschließeinrichtung 16 als Stülpdeckel, vorzugsweise mit einem Drehverschließmechanismus 24, ausgebildet ist.

Gemäß den Figuren 3 bis 6 ist bevorzugt, dass die Gasausströmeinrichtung 18 einen Absperrmechanismus 18a aufweist, um die CO2-Gas-Entnahme zu stoppen.

Gemäß den Figuren 4 bis 6 ist bevorzugt, dass die Gasausströmeinrichtung 18 eine Begasungsblasendetektionsvorrichtung 26 aufweist, um die Menge des in die Gasausströmeinrichtung 18 einströmenden CO2-Gas zu detektieren.

Gemäß den Figuren 3 bis 6 ist bevorzugt, dass die Gasausströmeinrichtung 18 an der Verschließeinrichtung 16 angeordnet ist, sodass das CO2-Gas aus der Verschließeinrichtung 16 in die Gasausströmeinrichtung 18 einströmen kann.

Weiterhin bevorzugt, jedoch nicht genauer vorgestellt ist, dass der Aquariendruckgasbehälter 10 eine Dichtung aufweist, die umfangsgemäß in einem Kopplungsbereich zwischen dem Aufnahmegefäß 14 und der Verschließeinrichtung 16 angeordnet ist, sodass im geschlossenem Zustand des Aquariendruckgasbehälters 10 das druckdichte Verschließen des Aufnahmegefäßes 14 dadurch entsteht, dass der Gasbehälterdruck p_G die Dichtung in den Kopplungsbereich zwischen dem Aufnahmegefäß 14 und der Verschließeinrichtung 16 presst.

Weiterhin bevorzugt, jedoch nicht genauer vorgestellt ist, dass die Gasausströmeinrichtung 18 und der Gasbehälterdruckregler 20 in einem gemeinsamen Modul angeordnet sind, das mit dem Aufnahmegefäß 14 und/oder mit der Verschließeinrichtung 16 verbunden ist.

Gemäß den Figuren 4 bis 6 ist bevorzugt, dass der Gasbehälterdruckregler 20 mit der Verschließeinrichtung 16 verbunden ist.

Das Gasausströmeinrichtung 18 kann den Absperrmechanismus 18a umfassen. Dies ist jedoch eine optionale Ausgestaltung und unabhängig von anderen Merkmalen.

Das Gasausströmeinrichtung 18 kann den Gasbehälterdruckregler 20 umfassen. Dies ist jedoch eine optionale Ausgestaltung und unabhängig von anderen Merkmalen.

Das Gasausströmeinrichtung 18 kann die Öffnungssicherung 22 umfassen. Dies ist jedoch eine optionale Ausgestaltung und unabhängig von anderen Merkmalen.

### Bezugszeichenliste

- 10: Aquariendruckgasbehälter
- 12: Aquarium
- 14: Aufnahmegefäß
- 16: Verschließeinrichtung
- 18: Gasausströmeinrichtung
- 18a: Absperrmechanismus
- 20: Gasbehälterdruckregler
- 22: Öffnungssicherung
- 24: Drehverschließmechanismus
- 26: Blasenzählvorrichtung
- 28: CO2-Begasungssystem
- 30: CO2-Begasungsleitung
- 32: CO2-Diffusor
- 34: 58-bar-Überdruckventil
- p_B: Begasungsdruck
- p_G: Gasbehälterdruck
- p_U: Umgebungsdruck

## Patentansprüche

1. Aquariendruckgasbehälter zur Versorgung eines Aquariums (12) mit im Aquariendruckgasbehälter (10) erzeugtem CO2-Gas,
der Aquariendruckgasbehälter (10) aufweisend:
- ein Aufnahmegefäß (14) zur Aufnahme eines Nährsubstrats und eines mit dem Nährsubstrat wechselwirkenden Reaktionsmittel derart, dass das Nährsubstrat und das Reaktionsmittel miteinander reagieren, um CO2-Gas zu erzeugen;
- eine Verschließeinrichtung (16) zum druckdichten Verschließen des Aufnahmegefäßes (14);
- eine Gasausströmeinrichtung (18) zur, insbesondere pausierbaren, CO2-GasEntnahme aus dem Aquariendruckgasbehälter (10) für das Aquarium (12), wobei das CO2-Gas beim Einströmen in die Gasausströmeinrichtung (18) einen gewünschten Begasungsdruck (p_B) aufweist;
- einen Gasbehälterdruckregler (20) zum Einstellen eines Gasbehälterdrucks (p_G),
**dadurch gekennzeichnet, dass** der Gasbehälterdruckregler (20) dazu ausgelegt ist den Gasbehälterdruck (p_G) derart einzustellen, dass er dem gewünschten Begasungsdruck (p_B) im Wesentlichen entspricht.

2. Aquariendruckgasbehälter nach Anspruch 1, **dadurch gekennzeichnet, dass** der Gasbehälterdruckregler (20) derart ausgebildet ist, dass der Gasbehälterdruck (p_G) einen Überdruck gegenüber einem Umgebungsdruck von mindestens einschließlich 30000 Pascal, bevorzugt mindestens einschließlich 50000 Pascal, besonders bevorzugt mindestens einschließlich 60000 Pascal beträgt.

3. Aquariendruckgasbehälter nach mindestens einem der Ansprüche 1 oder 2, **dadurch gekennzeichnet, dass**
der Gasbehälterdruckregler (20) derart ausgebildet ist, dass der Gasbehälterdruck (p_G) einen Überdruck gegenüber einem Umgebungsdruck von höchstens einschließlich 300000 Pascal, bevorzugt höchstens einschließlich 100000 Pascal, besonders bevorzugt höchstens einschließlich 90000 Pascal beträgt.

4. Aquariendruckgasbehälter nach mindestens einem der vorgenannten Ansprüche, **dadurch gekennzeichnet, dass**
die Gasausströmeinrichtung (18) ein Nadelventil aufweist und/oder der Gasbehälterdruckregler (20) ein Sicherheitsventil aufweist.

5. Aquariendruckgasbehälter nach mindestens einem der vorgenannten Ansprüche, **dadurch gekennzeichnet, dass**
der Aquariendruckgasbehälter (10) eine Öffnungssicherung (22) aufweist, um im Falle ihrer Betätigung den Gasbehälterdruck (p_G) auf den Umgebungsdruck (p_U) anzupassen.

6. Aquariendruckgasbehälter nach mindestens einem der vorgenannten Ansprüche, **dadurch gekennzeichnet, dass**
der Aquariendruckgasbehälter (10) wiederverwendbar ist, wobei insbesondere das Aufnahmegefäß (14) mit der Verschließeinrichtung (16) druckdicht wiederverschließbar ist.

7. Aquariendruckgasbehälter nach mindestens einem der vorgenannten Ansprüche, **dadurch gekennzeichnet, dass**
die Verschließeinrichtung (16) als Schraubdeckel oder als Stülpdeckel, vorzugsweise mit einem Drehverschließmechanismus (24), ausgebildet ist.

8. Aquariendruckgasbehälter nach mindestens einem der vorgenannten Ansprüche, **dadurch gekennzeichnet, dass**
die Gasausströmeinrichtung (18) einen Absperrmechanismus (18a) aufweist, um die CO2-Gas-Entnahme zu stoppen.

9. Aquariendruckgasbehälter nach mindestens einem der vorgenannten Ansprüche, **dadurch gekennzeichnet, dass**
die Gasausströmeinrichtung (18) eine Begasungsblasendetektionsvorrichtung (26) aufweist, um die Menge des in die Gasausströmeinrichtung (18) einströmenden CO2-Gas zu detektieren.

10. Aquariendruckgasbehälter nach mindestens einem der vorgenannten Ansprüche, **dadurch gekennzeichnet, dass**
die Gasausströmeinrichtung (18) am Aufnahmegefäß (14) und/oder an der Verschließeinrichtung (16) angeordnet ist, sodass das CO2-Gas aus dem Aufnahmegefäß (14) und/oder aus der Verschließeinrichtung (16) in die Gasausströmeinrichtung (18) einströmen kann.

11. Aquariendruckgasbehälter nach mindestens einem der vorgenannten Ansprüche, **dadurch gekennzeichnet, dass**
der Aquariendruckgasbehälter (10) eine Dichtung aufweist, die umfangsgemäß in einem Kopplungsbereich zwischen dem Aufnahmegefäß (14) und der Verschließeinrichtung (16) angeordnet ist, sodass im geschlossenem Zustand des Aquariendruckgasbehälters (10) das druckdichte Verschließen des Aufnahmegefäßes (14) dadurch entsteht, dass der Gasbehälterdruck (p_G) die Dichtung in den Kopplungsbereich zwischen dem Aufnahmegefäß (14) und der Verschließeinrichtung (16) presst.

12. Aquariendruckgasbehälter nach mindestens einem der vorgenannten Ansprüche, **dadurch gekennzeichnet, dass**
die Gasausströmeinrichtung (18) und der Gasbehälterdruckregler (20) in einem gemeinsamen Modul angeordnet sind, das mit dem Aufnahmegefäß (14) und/oder mit der Verschließeinrichtung (16) verbunden ist.

13. Aquariendruckgasbehälter nach mindestens einem der vorgenannten Ansprüche, **dadurch gekennzeichnet, dass**
der Gasbehälterdruckregler (20) mit dem Aufnahmegefäß (14) und/oder mit der Verschließeinrichtung (16) verbunden ist.

14. CO2-Begasungssystem (28) mit einem Aquariendruckgasbehälter (10) nach einem der vorgenannten Ansprüche;
das CO2-Begasungssystem (28) aufweisend
eine an der Gasausströmeinrichtung (18) angeschlossene CO2-Begasungsleitung (30) zur Versorgung des Aquariums (12) mit dem im Aquariendruckgasbehälter (10) erzeugten CO2-Gas;
wobei die CO2-Begasungsleitung (30) ausgebildet ist, um an ihrem von der Gasausströmeinrichtung (18) entfernten Ende in das Aquarium (12) eingetaucht zu sein.

15. CO2-Begasungssystem (28) nach dem vorgenannten Anspruch, wobei die CO2-Begasungsleitung (30) an ihrem von der Gasausströmeinrichtung (18) entfernten Ende einen CO2-Diffusor (32) aufweist, wobei der CO2-Diffusor (32) bevorzugt mit einem Durchströmungswiderstand von einschließlich 30000 Pascal bis einschließlich 60000 Pascal als Überdruck gegenüber einem Umgebungsdruck betreibbar ist.

## Claims

1. Aquarium gas cylinder for supplying an aquarium (12) with CO2 gas generated in the aquarium gas cylinder (10), wherein the aquarium gas cylinder (10) comprises:
a receiving vessel (14) for receiving a nutrient substrate and a reactant interacting with the nutrient substrate such that the nutrient substrate and the reactant react with each other to produce CO2 gas;
a closure means (16) for pressure-tightly sealing the receiving vessel(14);
a gas outflow means (18) for, in particular pausable, CO2 gas extraction from the aquarium gas cylinder (10) for the aquarium (12), wherein the CO2 gas, when flowing into the gas outflow means (18), has a desired gassing pressure (p_B);
a gas cylinder pressure regulator (20) for adjusting a gas cylinder pressure (p_G),
**characterized in that**
the gas cylinder pressure regulator (20) is configured to set the gas cylinder pressure (p_G) so that it essentially corresponds to the desired gassing pressure (p_B).

2. Aquarium gas cylinder according to claim 1,
**characterized in that**
the gas cylinder pressure regulator (20) is configured in such a way that the gas cylinder pressure (p_G) is an overpressure relative to an ambient pressure of at least 30000 pascals inclusive, preferably at least 50000 pascals inclusive, particularly preferably at least 60000 pascals inclusive.

3. Aquarium gas cylinder according to at least one of claims 1 and 2,
**characterized in that**
the gas cylinder pressure regulator (20) is configured such that the gas cylinder pressure (p_G) is an overpressure relative to an ambient pressure of at most 300000 Pascal inclusive, preferably at most 100000 Pascal inclusive, particularly preferably at most 90000 Pascal inclusive.

4. Aquarium gas cylinder according to at least one of the preceding claims,
**characterized in that**
the gas outflow means (18) comprises a needle valve and/or the gas cylinder pressure regulator (20) comprises a safety valve.

5. Aquarium gas cylinder according to at least one of the preceding claims,
**characterized in that**
the aquarium gas cylinder (10) comprises an opening safety device (22) in order to adjust the gas cylinder pressure (p_G) to the ambient pressure (p_U) in the case of its actuation.

6. Aquarium gas cylinder according to at least one of the preceding claims,
**characterized in that**
the aquarium gas cylinder (10) is reusable, in particular the receiving vessel (14) is resealable in a pressure-tight manner by use of the closure means (16).

7. Aquarium gas cylinder according to at least one of the preceding claims,
**characterized in that**
the closure means (16) is designed as a screw cap or as a snap-on cap, preferably comprising a rotary closing mechanism (24).

8. Aquarium gas cylinder according to at least one of the preceding claims,
**characterized in that**
the gas outflow means (18) comprises a shut-off mechanism (18a) to stop the CO2 gas extraction.

9. Aquarium gas cylinder according to at least one of the preceding claims,
**characterized in that**
the gas outflow means (18) comprises a gassing bubble detection device (26) for detecting the amount of CO2 gas flowing into the gas outflow means (18).

10. Aquarium gas cylinder according to at least one of the preceding claims,
**characterized in that**
the gas outflow means (18) is arranged at the receiving vessel (14) and/or at the closure means (16), so that the CO2 gas can flow from the receiving vessel (14) and/or from the closure means (14) into the gas outflow means (18).

11. Aquarium gas cylinder according to at least one of the preceding claims,
**characterized in that**
the aquarium gas cylinder (10) comprises a seal which is arranged circumferentially in a coupling region between the receiving vessel (14) and the closure means (16), so that in the closed state of the aquarium gas cylinder (10), the pressure-tight sealing of the receiving vessel (14) is achieved by the fact that the gas cylinder pressure (p_G) forces the seal into the coupling region between the receiving vessel (14) and the closure means (16).

12. Aquarium gas cylinder according to at least one of the preceding claims,
**characterized in that**
the gas outflow means (18) and the gas cylinder pressure regulator (20) are arranged in a common module which is connected to the receiving vessel (14) and/or to the closure means (16).

13. Aquarium gas cylinder according to at least one of the preceding claims,
**characterized in that**
the gas cylinder pressure regulator (20) is connected to the receiving vessel (14) and/or to the closure means (16).

14. CO2 gassing system (28) comprising an aquarium gas cylinder (10) according to any one of the preceding claims;
wherein the CO2 gassing system (28) comprises:
a CO2 gassing line (30) connected to the gas outflow means (18) for supplying the aquarium (12) with the CO2 gas generated in the aquarium gas cylinder (10),
wherein the CO2 gassing line (30) is configured to be immersed at its end remote from the gas outflow means (18) in the aquarium (12).

15. CO2 gassing system (28) according to the preceding claim, wherein the CO2 gassing line (30) comprises a CO2 diffuser (32) at its end remote from the gas outflow means (18), wherein the CO2 diffuser (32) is preferably operable with a flow resistance of 30000 Pascal inclusive up to 60000 Pascal inclusive as an overpressure with respect to an ambient pressure.

## Revendications

1. Récipient de gaz sous pression d'aquarium permettant l'alimentation d'un aquarium (12) avec du gaz CO₂ généré dans le récipient de gaz sous pression d'aquarium (10),
le récipient de gaz sous pression d'aquarium (10) présentant :
- un réservoir d'admission (14) permettant l'admission d'un substrat nutritif et d'un produit de réaction en interaction avec le substrat nutritif de telle manière que le substrat nutritif et le produit de réaction réagissent ensemble afin de générer du gaz CO₂ ;
- un dispositif de fermeture (16) permettant une fermeture étanche en pression du réservoir d'admission (14) ;
- un dispositif de sortie de gaz (18) permettant un prélèvement de gaz CO₂, en particulier pouvant être mis en pause, à partir du récipient de gaz sous pression d'aquarium (10) pour l'aquarium (12), où le gaz CO₂ présente, lors de la pénétration dans le dispositif de sortie de gaz (18), une pression d'alimentation en gaz (p_B) souhaitée ;
- un régulateur de pression de récipient de gaz (20) permettant le réglage d'une pression de récipient de gaz (p_G),
**caractérisé en ce que** le régulateur de pression de récipient de gaz (20) est conçu pour régler la pression de récipient de gaz (p_G) de telle manière qu'elle corresponde dans l'ensemble à la pression d'alimentation en gaz (p_B) souhaitée.

2. Récipient de gaz sous pression d'aquarium selon la revendication 1, **caractérisé en ce que**
le régulateur de pression de récipient de gaz (20) est conçu de telle manière que la pression de récipient de gaz (p_G) arbore une surpression vis-à-vis d'une pression environnementale d'au moins 30000 Pascal inclus, de préférence d'au moins 50000 Pascal inclus, de manière particulièrement préférée d'au moins 60000 Pascal inclus.

3. Récipient de gaz sous pression d'aquarium selon au moins une des revendications 1 ou 2, **caractérisé en ce que**
le régulateur de pression de récipient de gaz (20) est conçu de telle manière que la pression de récipient de gaz (p_G) arbore une surpression vis-à-vis d'une pression environnementale d'au plus 30000 Pascal inclus, de préférence d'au plus 100000 Pascal inclus, de manière particulièrement préférée d'au plus 90000 Pascal inclus.

4. Récipient de gaz sous pression d'aquarium selon au moins une des revendications précitées, **caractérisé en ce que**
le dispositif de sortie de gaz (18) présent une soupape à pointeau et/ou le régulateur de pression de récipient de gaz (20) présente une soupape de sécurité.

5. Récipient de gaz sous pression d'aquarium selon au moins une des revendications précitées, **caractérisé en ce que**
le récipient de gaz sous pression d'aquarium (10) présente une sécurité d'ouverture (22) afin d'adapter la pression de récipient de gaz (p_G) à la pression de l'environnement (p_U) dans le cas de son actionnement.

6. Récipient de gaz sous pression d'aquarium selon au moins une des revendications précitées, **caractérisé en ce que**
le récipient de gaz sous pression d'aquarium (10) est réutilisable, où, en particulier, le réservoir d'admission (14) peut être refermé de manière étanche en pression avec le dispositif de fermeture (16).

7. Récipient de gaz sous pression d'aquarium selon au moins une des revendications précitées, **caractérisé en ce que**
le dispositif de fermeture (16) est conçu comme un couvercle à visser ou un couvercle à cloche, de préférence avec un mécanisme de fermeture rotatif (24).

8. Récipient de gaz sous pression d'aquarium selon au moins une des revendications précitées, **caractérisé en ce que**
le dispositif de sortie de gaz (18) présente un mécanisme de blocage (18a) afin d'arrêter le prélèvement de gaz CO₂.

9. Récipient de gaz sous pression d'aquarium selon au moins une des revendications précitées, **caractérisé en ce que**
le dispositif de sortie de gaz (18) présente un dispositif de détection de bulles d'alimentation de gaz (26) afin de détecter la quantité du gaz CO₂ entrant dans le dispositif de sortie de gaz (18).

10. Récipient de gaz sous pression d'aquarium selon au moins une des revendications précitées, **caractérisé en ce que**
le dispositif de sortie de gaz (18) est disposé sur le réservoir d'admission (14) et/ou le dispositif de fermeture (16) de sorte que le gaz CO₂ puisse entrer dans le dispositif de sortie de gaz (18) à partir du réservoir d'admission (14) et/ou à partir du dispositif de fermeture (16).

11. Récipient de gaz sous pression d'aquarium selon au moins une des revendications précitées, **caractérisé en ce que**
le récipient de gaz sous pression d'aquarium (10) présente un joint qui est disposé de manière périphérique dans une zone de couplage entre le réservoir d'admission (14) et le dispositif de fermeture (16) de sorte que, dans l'état fermé du récipient de gaz sous pression d'aquarium (10), la fermeture étanche en pression du réservoir d'admission (14) se produit du fait que la pression de récipient de gaz (p_G) presse le joint dans la zone de couplage entre le réservoir d'admission (14) et le dispositif de fermeture (16).

12. Récipient de gaz sous pression d'aquarium selon au moins une des revendications précitées, **caractérisé en ce que**
le dispositif de sortie de gaz (18) et le régulateur de pression de récipient de gaz (20) sont disposés dans un module commun qui est relié avec le résrvoir d'admission (14) et/ou avec le dispositif de fermeture (16).

13. Récipient de gaz sous pression d'aquarium selon au moins une des revendications précitées, **caractérisé en ce que**
le régulateur de pression de récipient de gaz (20) est relié avec le réservoir d'admission (14) et/ou avec le dispositif de fermeture (16).

14. Système d'alimentation en gaz CO₂ (28) pourvu d'un récipient de gaz sous pression d'aquarium (10) selon l'une des revendications précitées ;
le système d'alimentation en gaz CO₂ (28) présentant
une conduite d'alimentation en CO₂ (30) raccordée au dispositif de sortie de gaz (18) pour l'alimentation de l'aquarium (12) avec le gaz CO₂ généré dans le récipient de gaz sous pression d'aquarium (10) ;
où la conduite d'alimentation en CO₂ (30) est conçue pour être immergée dans l'aquarium (12) au niveau de son extrémité éloignée du dispositif de sortie de gaz (18).

15. Système d'alimentation en CO₂ (28) selon la revendication précitée, dans lequel la conduite d'alimentation en CO₂ (30) présente un diffuseur de CO₂ (32) à son extrémité éloignée du dispositif de sortie de gaz (18), où le diffuseur de CO₂ (32) peut fonctionner avec une résistance à l'écoulement de 30000 Pascal inclus à 60000 Pascal inclus en tant que surpression vis-à-vis d'une pression environnementale.
